**Europäisches Patentamt**

**European Patent Office**

**Office européen des brevets**

(11) Veröffentlichungsnummer: **0 456 862 A1**

## (12) EUROPÄISCHE PATENTANMELDUNG

(21) Anmeldenummer: 90109326.0

(22) Anmeldetag: 17.05.90

(51) Int. Cl.⁵: **B21K 1/05, B21C 23/14**

(43) Veröffentlichungstag der Anmeldung:
21.11.91 Patentblatt 91/47

(84) Benannte Vertragsstaaten:
**DE FR GB SE**

(71) Anmelder: **Instytut Obrobki Plastycznej**
**ul. Zamenhofa 2/4**
**61-120 Poznan(PL)**

(72) Erfinder: **Grzeskowiak, Jerzy**

**ul. Grunwaldzka 37a/ 11**
**PL-60-783 Poznan(PL)**
Erfinder: **Wiegandt, Ryszard**
**ul. Zakret 7a**
**PL-60-351 Poznan(PL)**

(74) Vertreter: **Patentanwälte Zellentin & Partner**
**Zweibrückenstrasse 15**
**W-8000 München 2(DE)**

(54) Verfahren und Vorrichtung zum Fliesspressen von Kammteilen für Wälzlagerkäfige.

(57) Lagerkäfige bestehen aus einem Kammteil und einer Deckscheibe. Das Verfahren und die Vorrichtung weisen die folgenden Merkmale auf: In die blockaufnehmende Öffnung (15a, 15b) einer Matrize (12) wird ein ringförmiger Block eingeführt, dessen Masse größer ist als die Masse des Kammteiles, welcher gestaltet werden soll. Beim Pressen mit einem Stempel (6) erfolgt ein Vorwärts-Fließpressen des Blockmaterials in die Hohlräume (14) der Matrize (12), in welchen die Stege des Kammteiles geformt werden. Das Material wird weiterhin gepreßt, wobei durch Rückwärts-Fließpressen der Material-überschuß beseitigt wird. Dieser Überschuß fließt aus der Matrize (12) durch einen Spalt aus, der zwischen den Seitenwänden des oberen Teiles (15a) der blockaufnehmenden Öffnung und dem unteren Teil (6a) des Stempels (6) besteht. Es werden auch die Hohlräume (13) mit Material gefüllt, welche zur Gestaltung von Nietezapfen an den Enden der Kammteilstege dienen.

Fig. 4

Die Erfindung betrifft ein Verfahren und eine Vorrichtung zum Fließpressen von Kammteilen für Wälzlagerkäfige, welche aus einem Kammteil und einer Deckscheibe bestehen. Im Verfahren wird ein vorgewärmter ringförmiger Block in die blockaufnehmende Öffnung einer Matrize eingelegt und gepresst, wodurch ein Teil des Materials in die zur Gestaltung der Stege bestimmten Werkzeughohlräume fließgepresst wird. Danach wird der geformte Kammteil aus der Matrize ausgeworfen.

Aus der polnischen Patentschrift Nr. 65 617 ist ein Verfahren zum Fließpressen von Kammteilen für Wälzlagerkäfige bekannt, nach dem ein entsprechend vorgewärmter ringförmiger Block mittels eines Stempels in den formgebenden Hohlraum einer Matrize gepresst wird. Das Material fließt dabei durch die Öffnungen hindurch, deren Querschnitt dem Querschnitt der Stege entspricht. Das Fertigprodukt weist eine entsprechende Werkstoffzugabe für die endgültige spanabhebende Formgebung auf. Das Fließpressen wird derart durchgeführt, daß die durch Reibung entstehende Wärme dem Wärmeverlust an die Umgebung und an die Werkzeuge gleich ist.

Dieses bekannte Verfahren weist einige Nachteile auf. Die erhaltenen Kammteile müssen spanabhebend bearbeitet werden, wobei trotzdem die nötige Genauigkeit und Konstanz der Abmessungen nicht immer gewährleistet ist. Die so hergestellten Kammteile weisen Stege auf, welche vom Anfang bis zum Ende den gleichen Querschnitt haben. Der Kammteil und die Deckscheibe werden meistens durch Nieten verbunden, weswegen die freien Ende der Stege spanabhebend bearbeitet werden, um dort Nietezapfen zu gestalten. Diese Zapfen werden dann in entsprechende Bohrungen der Deckscheibe eingeführt und ihre freien Enden zu Schließköpfen geformt.

Der Erfindung liegt die Aufgabe zugrunde, ein Verfahren zu schaffen, welches durch Umformen Kammteile zu gestalten erlaubt, die Nietezapfen an den Stegenden aufweisen und formstabil sind.

Diese Aufgabe wird erfindungsgemäß dadurch gelöst, daß in die Matrize ein Block eingelegt wird, dessen Masse größer als die Masse des Kammteiles ist, welches gestaltet werden soll, und daß nach der Arbeitsstufe des Vorwärts-Fließpressens das Material weiterhin gepresst wird, wobei der Materialüberschuß durch Rückwärts-Fließpressen beseitigt wird und damit die zur Gestaltung des Kammteiles nötige Materialdosis bestimmt wird, sowie das Material nach vorwärts in Öffnungen fließgepresst wird, deren Querschnitte kleiner als die der Stege sind und die zur Formgebung der Nietezapfen dienen.

Mit dem erfindungsgemäßen Verfahren können Kammstücke hergestellt werden, welche mit Nietezapfen versehen sind. Diese Kammstücke haben genaue Abmessungen und benötigen keinerlei spanabhebende Bearbeitungen. Es wurde auch festgestellt, daß im Kammstück die Metallgefügestruktur sehr günstig ist. Die fertigen Lagerkäfige weisen eine sehr hohe Festigkeit auf. Sie können in Wälzlager eingebaut werden, die hohen Belastungen unterliegen und zuverlässig arbeiten müssen, zum Beispiel in schnellen Eisenbahnfahrzeugen.

Die Vorrichtung zur Durchführung des erfindungsgemäßen Verfahrens weist eine Matrize auf, welche mit einer ringförmigen blockaufnehmenden Öffnung sowie mit mehreren, die Stege des Kammteiles gestaltenden Öffnungen versehen ist, wobei für diese Matrize ein Matrizenhalter vorgesehen ist, welcher mit Auswerfern ausgerüstet ist und sich auf dem Tisch einer Presse abstützt, deren Stößel mit einem Stempel kraftschlüssig verbunden ist. Erfindungsgemäß ist der obere Teil der blockaufnehmenden Öffnung derart ausgeführt, daß zwischen den Seitenwänden des ringförmigen Teiles des Stempels und den Seitenwänden dieses Teiles der blockaufnehmenden Öffnung ein Spalt besteht, durch welchen der Überschuß an Material aus der Matrize rückwärts herausgepreßt werden kann.

Es ist vorteilhaft, wenn der Spalt zwischen den Seitenwänden des oberen Teiles der blockaufnehmenden Öffnung und dem ringförmigen Teil des Stempels keilförmig gestaltet ist.

Das hat zur Folge, daß je tiefer der Stempel in die blockaufnehmende Öffnung eingeschoben wird, dieser Spalt umso schmaler wird.

Die Erfindung wird an einem Ausführungsbeispiel unter Bezug auf Zeichnungen näher erläutert werden.

Es zeigt:

Fig. 1    einen Kammteil in axonometrischer Darstellung,

Fig. 2    eine Deckscheibe in axonometrischer Darstellung,

Fig. 3    einen Schnitt durch den Kammteil und die Deckscheibe eines fertigen Lagerkäfigs,

Fig. 4    den Stempel, die Matrize und ihren Halter im Schnitt,

Fig. 5    einen Ausschnitt der Matrize in Draufsicht,

Fig. 6    schematisch den Materialfluß am Anfang des Arbeitshubes,

Fig. 7    schematisch den Materialfluß während des ersten Vorwärts-Fließpressens,

Fig. 8    schematisch die Formgebung des Pressgrates beim Rückwärts-Fließpressen,

Fig. 9    schematisch den Materialfluß während des zweiten Vorwärts-Fließpressens, und

Fig. 10   einen Ausschnitt aus Fig. 9.

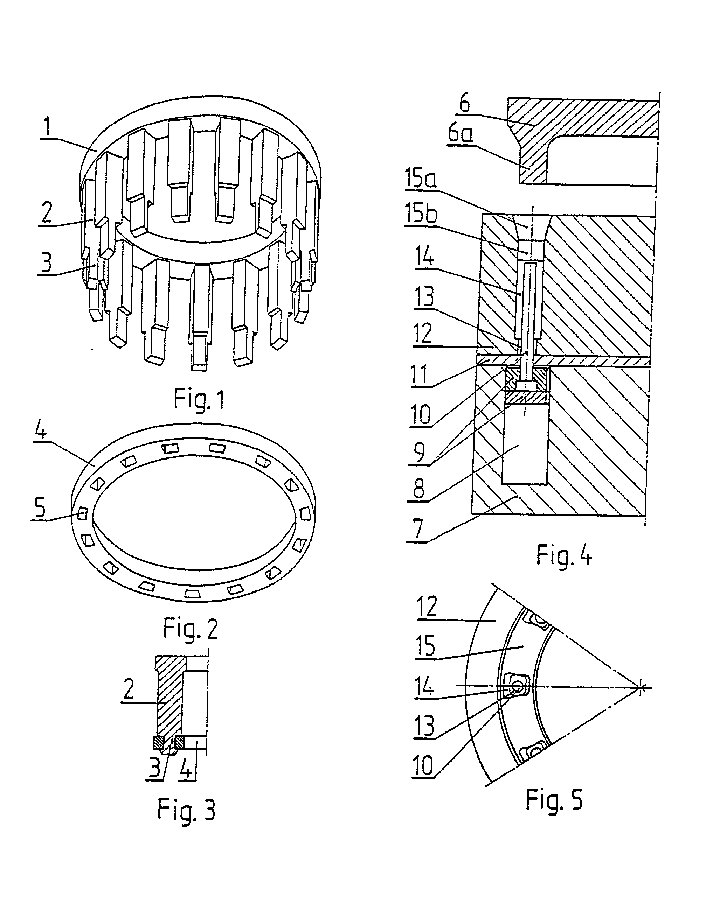

Ein in Fig. 1 gezeigter Kammteil eines Wälzlagerkäfigs hat einen Seitenring 1, auf dessen einer Stirnfläche Stege 2 angeordnet sind. Das freie Ende jedes Steges 2 ist in Form eines Nietezapfens 3 gestaltet.

In einer in Fig. 2 gezeigten Deckscheibe 4 sind Löcher 5 vorgesehen. Beim Zusammenbauen des Lagerkäfigs werden die Zapfen 3 in die Löcher 5 eingepresst und ihre Enden zu Schließköpfen geformt, was in Fig. 3 dargestellt ist.

Eine in Fig. 4 gezeigte Vorrichtung weist einen Stempel 6 auf, welcher an einem in der Zeichnung nicht dargestellten Stößel einer Presse befestigt ist. Der Vorderteil 6a des Stempels 6 ist ringförmig und hat einen rechteckigen Querschnitt. Auf dem in der Zeichnung nicht gezeigten Pressentisch ist ein Matrizenhalter 7 angeordnet, der einen Hohlraum 8 hat, in dem ein ringförmiger Halter 9 für Auswerfer 10 eingebaut ist. Die Zahl der Auswerfer 10 entspricht der Zahl der Stege 2. Der Halter 9 ist mittels nicht dargestellten Zugstangen mit dem Stempel 6 verbunden. Auf dem Matrizenhalter 7 ist eine Zwischenplatte 11 aufgelegt, in der Bohrungen zum Durchgang der Auswerfer 10 vorgesehen sind. Der Durchmesser dieser Bohrungen entspricht dem Durchmesser der Auswerfer 10. Auf der Zwischenplatte 11 stützt sich eine Matrize 12 ab, deren unterer Teil Formhohlräume 13 zum Gestalten der Nietezapfen 3 aufweist. Oberhalb dieser Hohlräume 13 befinden sich Hohlräume 14 zur Gestaltung der Stege 2. Diese Hohlräume 14 stehen mit einer blockaufnehmenden Öffnung in Verbindung, deren unterer Teil 15b einen rechteckigen und deren oberer Teil 15a einen trapezförmigen Querschnitt aufweist (s. Fig. 4).

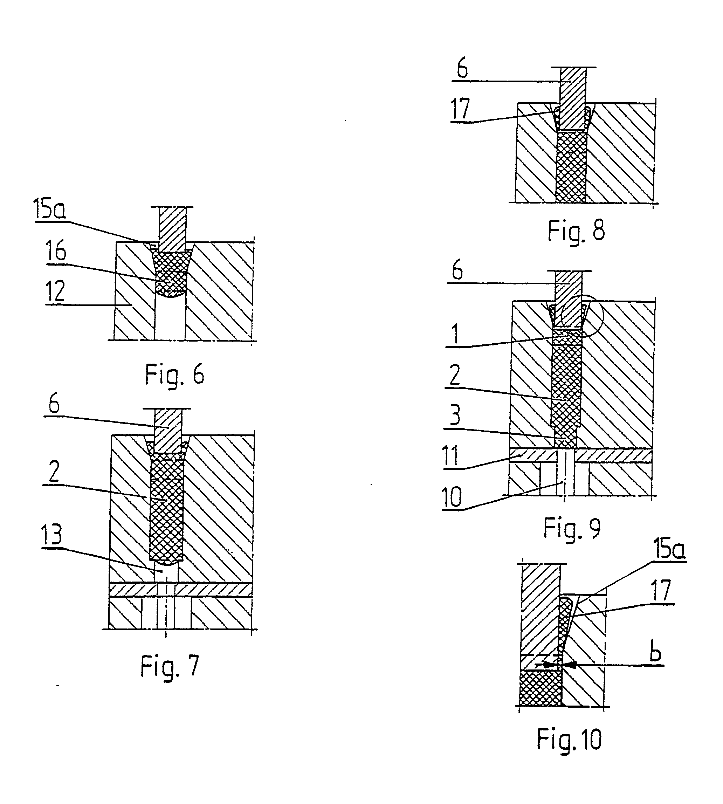

Das Fließpressen des Kammteiles wird folgendermaßen durchgeführt: Bei angehobenem Stempel 6 und dem mit ihm verbundenen Halter 9 der Auswerfer 10 wird in den unteren Teil 15b der blockaufnehmenden Öffnung ein vorgewärmter ringförmiger Block 16 aus Messing eingelegt. Die Masse des Blocks 16 ist etwas größer als die Masse des Kammteiles, welcher gestaltet werden soll. Danach wird die Presse in Gang gesetzt. Der ringförmige Teil 6a des Stempels 6 drückt auf den Block 16, wodurch im ersten Moment das Material gestaucht wird (Fig. 6). Beim weiteren Pressen wird das Vorwärts-Fließpressen des Metalls in die Hohlräume 14 verursacht, wodurch die Stege 2 geformt werden. Wenn die Stirnfläche des fließenden Materials die unteren Enden der Hohlräume 14 erreicht, steigt der Widerstand des Umformens wesentlich an, da das Material auf den geringeren Querschnitt der Hohlräume 13 trifft. Durch eine Steigerung der Presskraft am Stempel 6 wird das Rückwärts-Fließpressen des Materials verursacht. Durch die keilförmigen Spalte zwischen den Seitenwänden des Stempels und den Seitenwänden der blockaufnehmenden Öffnung fließt der Materialüberschuß nach oben und formt einen Grat 17 (Fig. 8). Bei weiterer Bewegung des Stempels 6 in Richtung der Matrize 12 schließt der ringförmige Teil 6a des Stempels den nach oben offenen ringförmigen Hohlraum 14 ab, wobei die keilförmigen Spalte im Endabschnitt des Arbeitshubes (unterer Umkehrpunkt des Stempels 6) eine Breite b von etwa 0,1 mm aufweisen (s. Fig. 10). Unter der Bezeichnung "Arbeitshub des Stempels" wird dabei der Abschnitt seiner Bewegung zwischen der ersten Berührung des Blocks und dem unteren Umkehrpunkt verstanden. Nun wird das Material durch Vorwärts-Fließpressen in die Hohlräume 13 bis zu den Stirnflächen der Auswerfer 10 gepresst (Fig. 9), wobei die Nietezapfen 3 geformt werden. Damit ist der Arbeitshub beendet. Der Pressestößel mit dem Stempel 6 wird gehoben, wodurch die Auswerfer 10 den fertigen Kammteil aus der Matrize 12 ausstoßen.

Die Spaltbreite b kann auch noch weiter verringert werden, so daß der Grat 17 schon beim Pressen in der Matrize abgeschert wird und dann auch dort entfernt werden muß.

**Patentansprüche**

1. Verfahren zum Fließpressen von Kammteilen für Wälzlagerkäfige, in welchem ein vorgewärmter ringförmiger Block (16) in eine blockaufnehmende Öffnung (15a, 15b) einer Matrize (12) eingelegt und gepresst wird, wodurch ein Teil des Materials durch die zur Gestaltung der Stege (2) bestimmten formgebenden Hohlräume (14) vorwärts-fließgepresst wird und der geformte Kammteil aus der Matrize (12) ausgeworfen wird, **dadurch gekennzeichnet**, daß in die Matrize (12) ein Block eingelegt wird, dessen Masse größer als die Masse des Kammteiles ist, welcher gestaltet werden soll, daß nach der Arbeitsstufe des Vorwärts-Fließpressens das Material weiterhin gepresst wird, wobei der Materialüberschuß durch Rückwärts-Fließpressen aus der Matrize gepresst wird und damit die zur Gestaltung des Kammteiles nötige Materialdosis bestimmt wird, und daß dann das Material vorwärts in Hohlräume (13) fließgepresst wird, deren Querschnitte kleiner als die der Stege (2) sind und die zur Formgebung der Nietezapfen (3) dienen.

2. Vorrichtung zum Fließpressen von Kammteilen für Wälzlagerkäfige mit einer Matrize (12), welche mit einer ringförmigen blockaufnehmenden Öffnung (15a, 15b) sowie mit mehreren, die Stege (2) des Kammteiles gestaltenden Hohlräumen (14) versehen ist, wobei für diese Matrize (12) ein Matrizenhalter (7) vorgesehen ist, welcher mit Auswerfern (10) ausgerüstet ist und sich auf dem Tisch einer Presse abstützt, deren Stößel mit einem Stempel (6) kraftschlüssig verbunden ist, **dadurch gekennzeichnet**, daß der obere Teil (15a) der blockaufnehmenden Öffnung derart ausgeführt ist, daß zwischen den Seitenwänden des ringförmigen Teiles (6a) des Stempels (6) und den Seitenwänden des oberen Teiles (15a) der blockaufnehmenden Öffnung ein Spalt besteht, durch welchen der Überschuß an Material aus der Matrize (12) herausgepresst werden kann.

3. Vorrichtung nach Anspruch 2, **dadurch gekennzeichnet**, daß der Spalt zwischen den Seitenwänden des oberen Teiles (15a) der blockaufnehmenden Öffnung und dem ringförmigen Teil (6a) des Stempels keilförmig gestaltet ist.

4. Vorrichtung nach Anspruch 3, **dadurch gekennzeichnet**, daß die minimale Breite (b) des keilförmigen Spaltes 0,1 mm beträgt.

Fig. 1

Fig. 2

Fig. 3

Fig. 4

Fig. 5

Fig. 6

Fig. 7

Fig. 8

Fig. 9

Fig. 10

Europäisches
Patentamt

**EUROPÄISCHER
RECHERCHENBERICHT**

Nummer der Anmeldung

**EP 90 10 9326**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | PL-A-6 561 7  (LUKASIEWICZ)<br>* Figuren 1-4 *<br>– – – | 1,2 | B 21 K 1/05<br>B 21 C 23/14 |
| Y | DE-U-8 702 734  (F. KRETZ GmbH)<br>* Seite 5, Zeile 16 - Seite 6, Zeile 2; Figuren 1,2,3 *<br>– – – | 1,2 | |
| A | PATENT ABSTRACTS OF JAPAN, Band 9, Nr. 11 (M-351)[1734], 18. Januar 1985;<br>& JP-A-59 159 241 (HITACHI SEISAKUSHO) 08-09-1984<br>* Zusammenfassung *<br>– – – | 1,2 | |
| A | US-A-3 150 773  (RICHTER)<br>* Spalte 5, Zeile 41 - Spalte 6, Zeile 16; Figuren 11-15 *<br>– – – | 1,2 | |
| A | EP-A-0 117 213  (A.M.I.S.)<br>* Seite 3, Zeile 12 - Seite 4, Zeile 12; Figuren 1,2 *<br>– – – | 1,2 | |
| A | US-A-3 314 278  (BERGMAN)<br>* Spalte 3, Zeilen 57-73; Figur 3 *<br>– – – – – | 1,2 | |

| RECHERCHIERTE SACHGEBIETE (Int. Cl.5) |
|---|
| B 21 K<br>B 21 C |

Der vorliegende Recherchenbericht wurde für alle Patentansprüche erstellt

| Recherchenort | Abschlußdatum der Recherche | Prüfer |
|---|---|---|
| Den Haag | 16 Januar 91 | THE K.H. |